# EUROPEAN PATENT SPECIFICATION

(11) **EP 4 292 193 B1**
(45) Date of publication and mention of the grant of the patent: **04.12.2024**
(21) Application number: 22851306.5
(22) Date of filing: 14.12.2022
(51) Int. Cl.: H02J 7/00

(54) **SAFE BATTERY CHARGING DURING HIGH AMBIENT TEMPERATURES**
SICHERES LADEN EINER BATTERIE BEI HOHEN UMGEBUNGSTEMPERATUREN
CHARGE DE BATTERIE SÛRE PENDANT DES TEMPÉRATURES AMBIANTES ÉLEVÉES

(30) Priority: 23.12.2021 US 202163293255 P
(43) Date of publication of application: 20.12.2023
(73) Proprietor: Google LLC, Mountain View, CA 94043 (US)
(72) Inventor: WANG, David, Mountain View, California 94043 (US); RAGHUPATHY, Arun Prakash, Mountain View, California 94043 (US); YE, Chang Hong, Mountain View, California 94043 (US); RYLANDER, Ford, Mountain View, California 94043 (US)
(74) Representative: Maikowski & Ninnemann Patentanwälte Partnerschaft mbB
(86) International application number: PCT/US2022/081580
(87) International publication number: WO 2023/122464

(56) References cited:
- FR-A1- 3 015 124

## Description

### BACKGROUND

Some electronic devices utilize both line power and battery power for different operations. For example, a video-recording doorbell device may use line power to operate its camera but use battery power to operate its doorbell chime. In this way, when a user presses a doorbell button to trigger the chime, the camera operation is not interrupted because, in this example, the chime does not draw power from the same power source as the camera and operates independently from the camera. To sustain the battery for long periods of time, the electronic device may automatically charge the battery when the battery has a low state-of-charge (SOC). In some geographical locations, however, safely charging the battery may be challenging due to temperature constraints.

Conventional lithium-ion (Li-ion) batteries can charge and/or discharge safely up to a certain internal temperature (e.g., 60 °C). Some Li-ion batteries have cell chemistries that enable the battery to safely discharge up to a higher maximum discharge temperature (e.g., 80 °C) but safely charge only up to a lower maximum charge temperature (e.g., 60 °C). Within the range between the maximum discharge and charge temperatures, the battery is not able to charge but can still discharge. Consequently, if the battery temperature cannot be decreased to below the lower maximum charge temperature (e.g., due to high ambient temperatures preventing sufficient cooldown of the battery temperature) but is below the higher maximum discharge temperature, then the battery may discharge until it depletes completely or triggers a low-battery shut down state where operations powered by the battery are no longer available, resulting in a poor user experience. FR3015124A1 discloses a method for charging an electric vehicle battery in order to reduce ageing and extend lifespan. The charging of the battery is planned over a future period on the basis of an estimated future temperature of the battery over the future period, so as to minimize the calendar aging of the battery.

### SUMMARY

The present document describes techniques for safe battery charging during high ambient temperatures. These techniques extend device runtime during peak use periods when ambient temperature is high by increasing the possibility for battery charging during high ambient temperature conditions. In an example, a device, during high ambient temperatures, checks future ambient temperatures over a network to identify if the minimum future ambient temperature over a block of time within the next N number of days is predicted to be sufficiently low that, when combined with device-performance throttling, is estimated to reduce the temperature of the battery to below the maximum charge temperature to enable the battery to be safely charged. In a further example, the device uses the future ambient temperatures to budget current battery usage by implementing and/or adjusting device-performance throttling.

In an example, a method performed by an electronic device is described. The method includes determining that a battery temperature of a battery of the electronic device has exceeded a first temperature threshold and in response to the battery temperature exceeding the first temperature threshold, determining whether to initiate charging of the battery based on a first state-of-charge threshold. The method also includes estimating future battery temperatures for each of a plurality of future time periods based on the local-weather-forecast data combined with battery-temperature data associated with a plurality of device-performance throttling modes for the electronic device. In addition, the method includes identifying, using the local-weather-forecast data, whether one or more future time periods of the plurality of future time periods exists within a next N number of days in which an ambient temperature around the electronic device is forecasted to be sufficiently low that, when combined with device-performance throttling of the electronic device, is estimated to reduce the battery temperature to below a second temperature threshold to enable the battery to be charged. The method thus may include identifying whether one or more future time periods of the plurality of future time periods exists within the next N days in which the estimated future battery temperature is below the second temperature threshold to enable the battery to be charged.

In an example, an electronic device is disclosed. The electronic device includes a battery configured to power one or more functions, a processor, and a memory for storing computer-readable instructions that, when executed by the processor, implement a battery-manager module and a charge-time predictor. The battery-manager module is configured to determine that a battery temperature of a battery of the electronic device has exceeded a first temperature threshold and in response to the battery temperature exceeding the first temperature threshold, determine whether to initiate charging of the battery based on a first state-of-charge threshold. The charge-time predictor is configured to, responsive to a determination that the state-of-charge of the battery is below the first state-of-charge threshold, obtain local-weather-forecast data from a weather source over a network based on a geographic location of the electronic device. The charge-time predictor is further configured to estimate future battery temperatures during each of a plurality of future time periods based on the local-weather-forecast data combined with battery-temperature data associated with a plurality of device-performance throttling modes for the electronic device. Also, the charge-time predictor is configured to identify, using the local-weather-forecast data, whether one or more future time periods of the plurality of future time periods exists within a next N number of days in which an ambient temperature around the electronic device is estimated to be sufficiently low that, when combined with device-performance throttling of the electronic device, is estimated to reduce the battery temperature to below a second temperature threshold to enable the battery to be charged.

This summary is provided to introduce simplified concepts of safe battery charging during high ambient temperatures, which are further described below in the Detailed Description. This summary is not intended to identify essential features of the claimed subject matter, nor is it intended for use in determining the scope of the claimed subject matter.

### BRIEF DESCRIPTION OF THE DRAWINGS

The details of one or more aspects of safe battery charging during high ambient temperatures are described in this document with reference to the following drawings. The same numbers are used throughout the drawings to reference like features and components:
FIG. 1 illustrates an example implementation of an electronic device configured for safe battery charging during high ambient temperatures in accordance with the techniques described herein;
FIG. 2 illustrates an example implementation of the electronic device from FIG. 1 in more detail;
FIG. 3 illustrates an example implementation of thermal-mitigation techniques including device-performance throttling modes;
FIGs. 4 and 5 depict example methods for safe battery charging during high ambient temperatures.

### DETAILED DESCRIPTION

The present document describes techniques for safe battery charging during high ambient temperatures. The techniques described herein enable an electronic device to implement safety measures if its battery is above a maximum charge temperature but has a relatively low SOC. For example, the electronic device checks future ambient temperatures and solar conditions in the local region of the electronic device to determine if a block of time (e.g., three-hour period) exists where the ambient temperature is predicted to be sufficiently low that, when combined with device-performance throttling, is estimated to reduce the battery temperature to within a safe temperature range for charging (e.g., below the maximum charge temperature).

By identifying if and when such a time period is estimated to occur, the electronic device can determine whether to budget current battery usage. In one example, if the electronic device does not identify a time period within the next e.g., three days, in which the battery could be safely charged with (or without) device-performance throttling (e.g., if the electronic device does not identify a future time period within the next N days in which the estimated future battery temperature is below the second temperature threshold), the electronic device budgets current battery usage by adjusting current device-performance throttling on battery-powered operations to extend the current cycle of the battery. In another example, if the electronic device identifies a time period within the next e.g., three days, in which the battery can be safely charged with device-performance throttling (e.g., if there is a future time period within the next N days in which the estimated future battery temperature is below the second temperature threshold), the electronic device notifies the user and requests permission to enter a throttling mode during the identified time period to safely charge the battery during that time period.

The techniques described herein extend device runtime during peak periods when the ambient temperature is high by increasing the possibility for battery charging during high ambient temperature conditions, including high average temperature conditions. Further, these techniques reduce the likelihood of a battery being depleted when high ambient temperatures contribute to causing the battery temperature to be between the maximum charge temperature and the maximum discharge temperature, which is greater than the maximum charge temperature, thereby preventing the battery from charging but enabling the battery to still discharge.

While features and concepts of the described techniques for safe battery charging during high ambient temperatures can be implemented in any number of different environments, aspects are described in the context of the following examples.

### Example Device

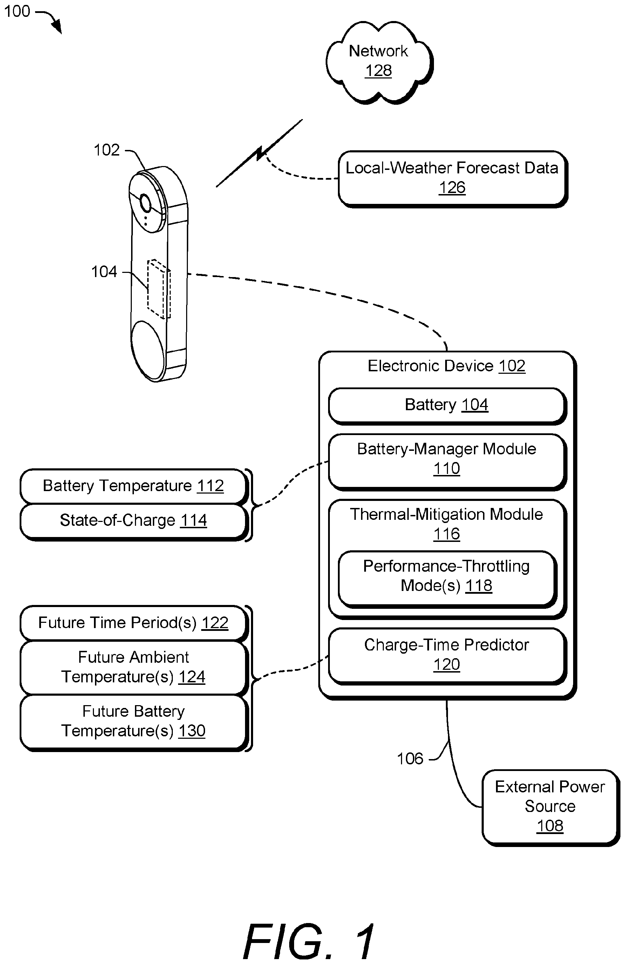

FIG. 1 illustrates an example implementation 100 of an electronic device configured for safe battery charging during high ambient temperatures in accordance with the techniques described herein. The illustrated example includes an electronic device 102 having a battery 104, which provides battery power to the electronic device 102, and a wire 106 (e.g., power cord) coupled to an external power source 108 (e.g., outlet, power bank, computing device), which provides line power to the electronic device 102.

The electronic device 102 also includes a battery-manager module 110, which is configured to monitor and manage the battery 104, including controlling charging events of the battery 104 and monitoring battery health. The battery-manager module 110 is configured to check battery health (e.g., battery temperature, SOC) and provide notifications (e.g., alerts) when detecting problems with the battery 104. By controlling charging events, the battery-manager module 110 can optimize the charging of the battery 104 to reduce chemistry degradation and ion consumption within the battery 104, thereby extending the life of the battery 104. In an example, the coupling to the external power source 108 is a wireless connection (e.g., using inductive coils).

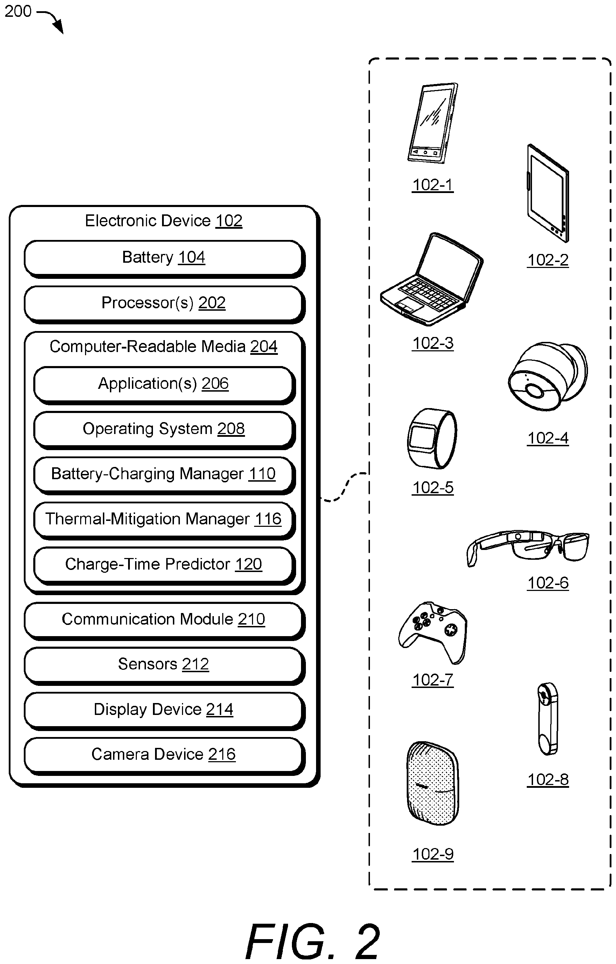

The battery 104 may be any suitable rechargeable battery. An example battery 104, as described herein (see FIG. 2), is a Li-ion battery. Any suitable Li-ion-battery chemistry may be implemented.

The battery-manager module 110 is configured to determine battery temperature 112 and state-of-charge 114 (SOC 114). The battery temperature 112 indicates a current internal temperature of the battery 104. The battery-manager module 110 monitors the battery temperature 112 in relation to the maximum charge temperature of the battery 104. The battery-manager module 110 also monitors the SOC 114 of the battery 104 in relation to one or more ranges of SOC and/or threshold SOCs to determine if the battery 104 needs charging.

The SOC 114 may include a current SOC level (e.g., 0%, 2%, 10%, 23%, 30%, 50%, 80%, 98%, 100%) of the battery 104. Generally, the SOC 114 is determined by a percentage of the charge capacity of the battery 104. However, the SOC 114 may be determined based on any suitable quantifiable measure.

The electronic device 102 also includes a thermal-mitigation module 116 configured to implement one or more device-performance throttling modes 118. The device-performance throttling mode 118 may be implemented to reduce battery-power consumption by the electronic device 102 and/or to reduce heat dissipation resulting from power consumption by one or more components (e.g., the processor(s) 202) of the electronic device 102. Throttling device performance (e.g., deactivating one or more processes and/or components) may enable the battery temperature 112 to decrease. In aspects, implementing a device-performance throttling mode 118 during a time period in which the ambient temperature is low, may reduce the battery temperature 112 to below the maximum charge temperature of the battery 104 and thus enable the battery 104 to be safely charged.

The electronic device 102 also includes a charge-time predictor 120. The charge-time predictor 120 is a module configured to estimate future time periods 122, which may or may not be used to safely charge the battery 104. The estimated future time periods 122 may each be any suitable duration of time. In aspects, the estimated future time periods 122 correspond to estimated future ambient temperatures 124 derived or determined from local-weather forecast data 126, which may be obtained from a weather information source (e.g., server, weather server, search engine) over a network 128.

In an example, the local-weather forecast data 126 includes a 7-day hourly forecast for the geographical region (e.g., locale, location, area, city) corresponding to the location of the electronic device 102. The charge-time predictor 120 determines the future ambient temperatures 124 for the electronic device 102, using the local-weather forecast data 126, as well as solar conditions for the electronic device 102 for each time period 122. The future ambient temperature 124 for a time period 122 may be determined as an average ambient temperature over the duration of the time period 122, which may be several hours long. Further, for each future time period 122, the charge-time predictor 120 estimates thermal effects of different device-performance throttling modes 118 on the battery temperature 112, combined with the future ambient temperatures and solar conditions. In this way, the charge-time predictor 120 estimates future battery temperatures 130 for each future time period 122. Using the estimated future battery temperatures 130 for each future time period 122, the battery-manager module 110 can determine if a time period exists when, based on forecast ambient temperatures and solar conditions combined with a device-performance throttling mode of the electronic device 102, the future battery temperature 130 is estimated to be less than a temperature threshold (e.g., the maximum charge temperature) to enable charging of the battery 104.

The electronic device 102 may also be configured to communicate with one or more devices or servers over the network 128. By way of example and not limitation, the electronic device 102 may communicate data over a local-area-network (LAN), a wireless local-area-network (WLAN), a personal-area-network (PAN), a wide-area-network (WAN), an intranet, the Internet, a peer-to-peer network, point-to-point network, or a mesh network.

Consider now FIG. 2, which illustrates an example implementation of the electronic device from FIG. 1 in more detail. The electronic device 102 of FIG. 2 is illustrated with a variety of example devices, including a smartphone 102-1, a tablet 102-2, a laptop 102-3, a security camera 102-4, a computing watch 102-5, computing spectacles 102-6, a gaming system 102-7, a video-recording doorbell 102-8, and a speaker 102-9. The electronic device 102 can also include other devices, e.g., televisions, entertainment systems, audio systems, projectors, automobiles, drones, track pads, drawing pads, netbooks, e-readers, home security systems, and other home appliances. Note that the electronic device 102 can be mobile, wearable, non-wearable but mobile, or relatively immobile (e.g., desktops and appliances).

The electronic device 102 includes a battery (e.g., battery 104). The battery 104 may be any suitable rechargeable battery. As described herein, the battery 104 may be a Li-ion battery. Various different Li-ion-battery chemistries may be implemented, some examples of which include lithium iron phosphate (LiFePO₄), lithium manganese oxide (LiMn₂O₄ spinel, or Li₂MnO₃-based lithium-rich layered materials, LMR-NMC), and lithium nickel manganese cobalt oxide (LiNiMnCoO₂, Li-NMC, LNMC, NMC, or NCM). Many batteries are susceptible to chemistry degradation at higher voltages (e.g., above 80% SOC) and lower voltages (e.g., below 20% SOC). Because of this susceptibility, battery life can be significantly extended if maintained (used and stored) at a medium-range SOC (e.g., between 20% and 80%, including around 50%). Many batteries are also susceptible to thermal events above 60 °C, including thermal runaway. Some batteries, due to their chemistry, can withstand an internal temperature up to 80 °C before experiencing thermal events. To avoid degradation and damage, these batteries should not be charged above a maximum charge temperature (e.g., 60 °C) even though some batteries have a maximum discharge temperature that is higher than the maximum charge temperature, enabling the batteries to continue discharging safely at higher temperatures until depletion without being able to safely charge.

The electronic device 102 includes one or more processors 202 (e.g., any of microprocessors, controllers, or other controllers) that can process various computer-executable instructions to control the operation of the electronic device 102 and to enable techniques for safe battery charging during high ambient temperatures. Alternatively or additionally, the processor(s) 202 can be implemented with any one or combination of hardware elements, firmware, or fixed logic circuitry that is implemented in connection with processing and control circuits. Although not shown, the electronic device 102 can include a system bus or data transfer system that couples the various components within the device. A system bus can include any one or combination of different bus structures, such as a memory bus or memory controller, a peripheral bus, a universal serial bus, and/or a processor or local bus that utilizes any of a variety of bus architectures.

The electronic device 102 also includes computer-readable media 204 (CRM 204), such as one or more memory devices that enable persistent and/or non-transitory data storage (in contrast to mere signal transmission), examples of which include random access memory (RAM), non-volatile memory (e.g., any one or more of a read-only memory (ROM), flash memory, EPROM, EEPROM, etc.), and a disk storage device. A disk storage device may be implemented as any type of magnetic or optical storage device, such as a hard disk drive, a recordable and/or rewritable compact disc (CD), any type of a digital versatile disc (DVD).

The computer-readable media 204 provides data storage mechanisms to store various device applications 206, an operating system 208, memory/storage, and other types of information and/or data related to operational aspects of the electronic device 102. For example, the operating system 208 can be maintained as a computer application within the computer-readable media 204 and executed by the processor(s) 202 to provide some or all of the functionalities described herein. The device applications 206 may include a device manager, such as any form of a control application, software application, or signal-processing and control modules. The device applications 206 may also include system components, engines, or managers to implement techniques for safe battery charging during high ambient temperatures, such as the battery-manager module 110, the thermal-mitigation module 116, and the charge-time predictor 120. The electronic device 102 may also include, or have access to, one or more machine learning systems.

Various implementations of the battery-manager module 110, the thermal-mitigation module 116, and the charge-time predictor 120 can include, or communicate with, a System-on-Chip (SoC), one or more Integrated Circuits (ICs), a processor with embedded processor instructions or configured to access processor instructions stored in memory, hardware with embedded firmware, a printed circuit board with various hardware components, or any combination thereof.

The electronic device 102 may also include the communication module 210 (e.g., network interface). The electronic device 102 can use the communication module 210 for communicating data over wired, wireless, or optical networks (e.g., the network 128). By way of example and not limitation, the communication module 210 may communicate data over a local-area-network (LAN), a wireless local-area-network (WLAN), a personal-area-network (PAN), a wide-area-network (WAN), an intranet, the Internet, a peer-to-peer network, point-to-point network, or a mesh network. The communication module 210 can be implemented as one or more of a serial and/or parallel interface, a wireless interface, any type of network interface, a modem, or any other type of communication interface. Using the communication module 210, the electronic device 102 may communicate via a cloud computing service (e.g., the network 128) to access a platform having resources. In some aspects, the electronic device 102 may use the communication module 210 to retrieve software updates to enable the battery-manager module 110 to be updated and/or implemented on the electronic device 102.

The electronic device 102 also includes one or more sensors 212, which can include any of a variety of sensors, including an audio sensor (e.g., a microphone), a touch-input sensor (e.g., a touchscreen, a fingerprint sensor, a capacitive touch sensor), an image-capture device (e.g., a camera or video camera), a proximity sensor (e.g., capacitive sensor), a temperature sensor (e.g., thermistor), or an ambient light sensor (e.g., photodetector).

The electronic device 102 can also include a display device (e.g., display device 214). The display device 214 can include any suitable touch-sensitive display device, e.g., a touchscreen, a liquid crystal display (LCD), thin film transistor (TFT) LCD, an in-place switching (IPS) LCD, a capacitive touchscreen display, an organic light-emitting diode (OLED) display, an active-matrix organic light-emitting diode (AMOLED) display, super AMOLED display, and so forth. The display device 214 may be referred to as a display or a screen, such that digital content may be displayed on-screen.

The electronic device 102 may also include a camera device 216 configured to capture images and/or video of a scene within a field of view (FOV) of the camera device 216. The images captured by the camera device 216 can be used for detection, object detection (e.g., face detection), object identification (e.g., facial recognition, animal identification), and so forth.

Although not shown, the electronic device 102 also includes I/O interfaces for receiving and providing data. For example, the I/O interfaces may include one or more of a touch-sensitive input, a capacitive button, a microphone, a keyboard, a mouse, an accelerometer, a display, a light-emitting diode (LED) indicator, a speaker, or a haptic feedback device.

Further to the descriptions above, a user may be provided with controls allowing the user to make an election as to both if and when systems, programs, or features described herein may enable collection of user information (e.g., information about a user's social network, social actions or activities, profession, a user's preferences, a user's current location, a user's calendar schedule, or a user's scheduled activities), and if the user is sent content or communications from a server. In addition, certain data may be treated in one or more ways before it is stored or used so that personally identifiable information is removed. For example, a user's identity may be treated so that no personally identifiable information can be determined for the user, or a user's geographic location may be generalized where location information is obtained (such as to a city, ZIP code, or state level) so that a particular location of a user cannot be determined. Thus, the user may have control over what information is collected about the user, how that information is used, and what information is provided to the user.

These and other capabilities and configurations, as well as ways in which entities of FIGs. 1 and 2 act and interact, are set forth in greater detail below. These entities may be further divided, combined, and so on. The implementation 100 of FIG. 1 and the detailed illustrations of FIG. 2 through FIG. 5 illustrate some of many possible environments, devices, and methods capable of employing the described techniques, whether individually or in combination with one another.

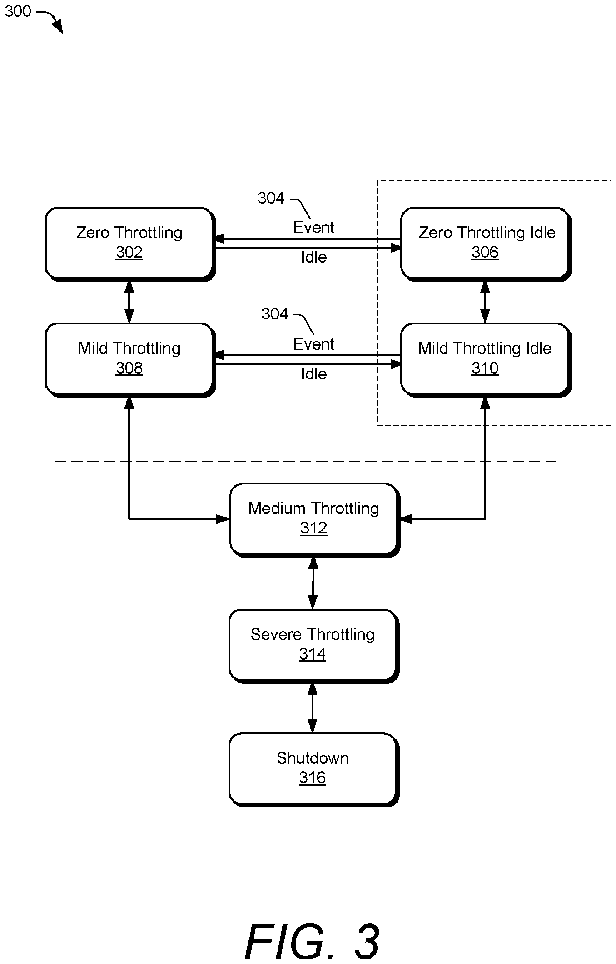

FIG. 3 illustrates an example implementation 300 of thermal-mitigation techniques including device-performance throttling modes. The example implementation 300 illustrates a number of different device-performance throttling modes, which may be used to either provide full performance (zero throttling) or to restrict performance and consume less power, thereby generating less heat. Different levels of throttling (e.g., zero, mild, medium, severe, shutdown) may be used depending on how much to reduce heat generation to enable the battery 104 to cool. Any suitable number and/or configuration of throttling modes can be implemented.

The example illustrated in FIG. 3 shows various throttling modes and corresponding transitions. A first throttling mode may include zero throttling 302 (zero-throttling mode 302), which is a full-featured, full-performance mode of the electronic device 102. In one example, the zero-throttling mode 302 permits operation up to 4.5 Watts (W) and includes 960 progressive scan (p) at 30 frames-per-second (fps) and 80% machine learning (ML), which results in high levels of power dissipation. When no event 304 (e.g., motion within the FOV of the camera device 216) is occurring, the electronic device 102 may enter an idle mode (e.g., zero-throttling idle 306 (zero-throttling-idle mode 306)). The zero-throttling-idle mode 306 uses less power than the zero-throttling mode 302. In an example, the zero-throttling-idle mode 306 permits operation up to 3.2W of power, using 960p at 30fps and 40% ML. When an event 304 is detected, the electronic device 102 may exit the idle mode and enter the full-performance mode (e.g., zero-throttling mode 302).

A second throttling mode may include mild throttling 308 (mild-throttling mode 308), which has reduced performance relative to zero throttling 302 and zero-throttling-idle 306 modes. Compared to zero throttling 302, the mild throttling 308 may include a reduced video quality. In an example, the mild-throttling mode 308 permits operation up to 4.1W, using 720p at 15fps and 80% ML when an event 304 is detected. When operating according to the mild-throttling mode 308, the electronic device 102 may enter an idle mode (e.g., mild-throttling idle 310 (mild-throttling-idle mode 310)) when no event 304 is occurring. The mild-throttling-idle mode 310 uses less power than the mild-throttling mode 308. In an example, the mild-throttling-idle mode 310 permits operation up to 3.1W, using 720p at 15fps and 40% ML.

A third throttling mode may include medium throttling 312 (medium-throttling mode 312), which has reduced performance relative to the mild throttling 308 and mild-throttling idle 310 modes. To reduce heat dissipation, the medium-throttling mode 312 can be implemented to reduce video quality and disable (turn off) machine learning operations. In an example, the medium throttling mode 312 permits up to 2.6W, using 720p at 15fps with no high-dynamic-range imaging and no machine learning operation.

To further reduce heat dissipation, a fourth throttling mode may be implemented. The fourth throttling mode may include severe throttling 314 (severe-throttling mode 314). Severe throttling 314 further reduces device performance relative to the medium throttling 312. In an example, the severe-throttling mode 314 permits up to 0.6W and disables one or more additional features, such as camera and/or audio operations. In another example, by implementing the severe-throttling mode 314, a video-recording doorbell device disables non-battery-powered functions, including video and audio, and only permits one or more battery-powered functions, such as a doorbell chime. Severe throttling 314 may be used in extreme circumstances when the ambient temperature is sufficiently high that, when combined with heat-dissipating functions (including low-powered video and audio functions), the battery temperature 112 cannot cool to below the maximum charge temperature of the battery 104 for safe charging. Disabling such functions can, depending on the ambient temperature, enable the battery temperature 112 to decrease to within the safe-temperature range for charging (e.g., below the maximum charge temperature).

In further extreme circumstances where the ambient temperature is too high for the battery temperature 112 to cool to within the safe-temperature range for charging, a fifth throttling mode (e.g., shutdown 316) can be implemented to turn off all operations of the electronic device 102. In an example, the shutdown mode 316 uses 0W because it causes the electronic device 102 to turn off completely.

The illustrated throttling modes are described as examples of various different levels of device-performance throttling. Any suitable number of different levels can be implemented and the throttling modes are not limited to the examples described herein. For example, any of the throttling modes may enable or disable functions different from the specific examples described and use different levels of power and quality from the specific examples described.

### Example Methods

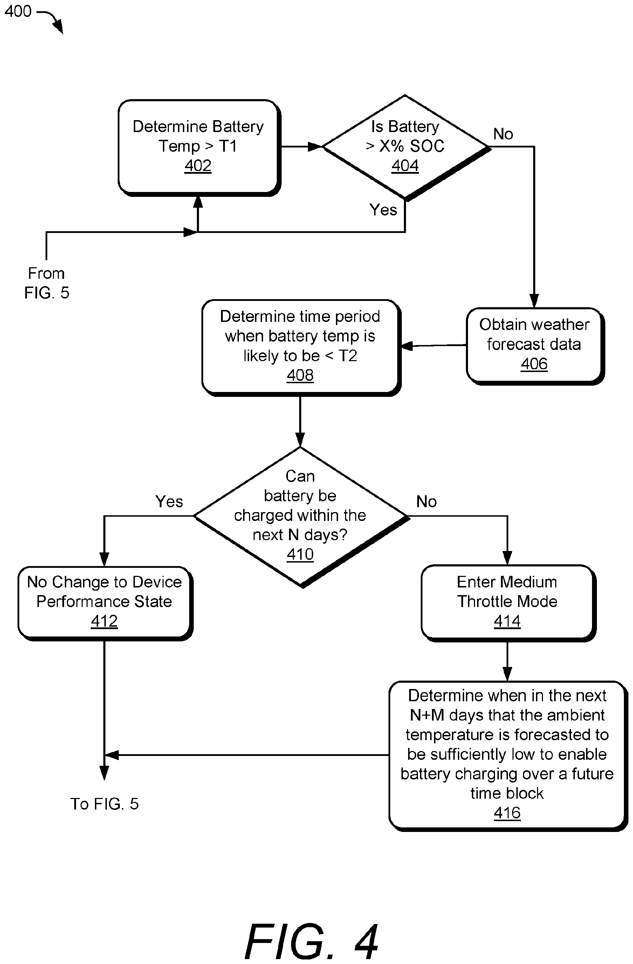

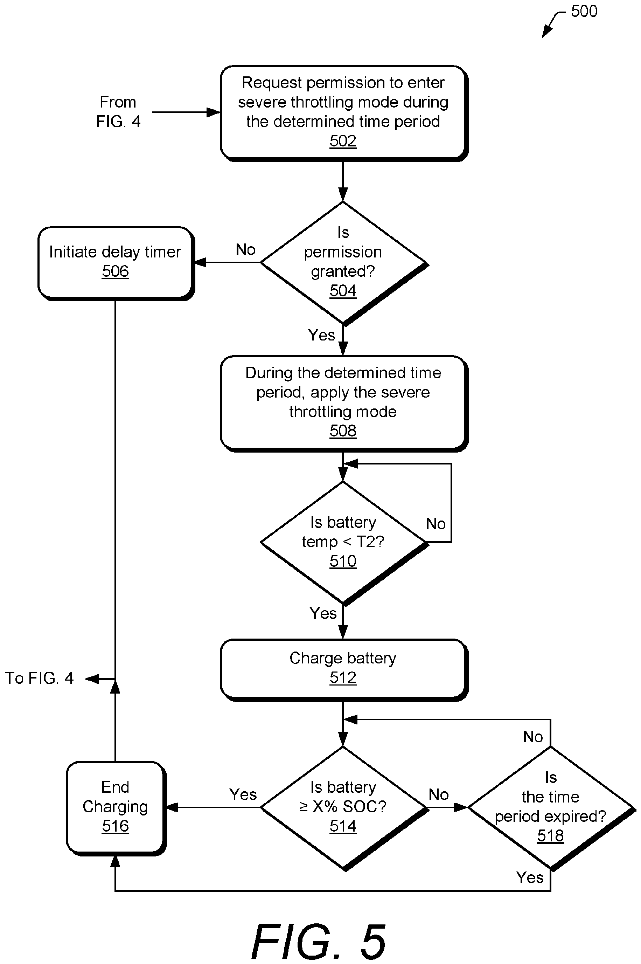

FIGs. 4 and 5 depict example methods 400 and 500, respectively, for safe battery charging during high ambient temperatures. The methods 400 and 500 can be performed by the electronic device 102, which uses the battery-manager module 110, the thermal-mitigation module 116, and/or the charge-time predictor 120 to implement the described techniques. The methods 400 and 500 collectively provide enhanced safety, reliability, performance, and sustainability for the battery 104 and the electronic device 102. The method 500 is supplemental to, and is optionally performed in conjunction with, the method 400.

The methods 400 and 500 are shown as a set of blocks that specify operations performed but are not necessarily limited to the order or combinations shown for performing the operations by the respective blocks. Further, any of one or more of the operations may be repeated, combined, reorganized, or linked to provide a wide array of additional and/or alternate methods. In portions of the following discussion, reference may be made to the example implementation 100 of FIG. 1 or to entities or processes as detailed in FIGs. 2 and 3, reference to which is made for example only. The techniques are not limited to performance by one entity or multiple entities operating on one device.

At 402, the battery temperature of a battery is determined to be greater than a first temperature threshold *T1.* This high temperature of the battery may be determined based on a battery charger hot-temperature fault indicating that the battery temperature has exceeded the first temperature threshold *T1.* In an example, the battery-manager module 110 determines that the battery temperature 112 of the battery 104 has exceeded the first temperature threshold *T1* (e.g., the maximum charge temperature) for charging.

At 404, the electronic device determines if the battery currently has an SOC that is greater than (or less than) a first SOC threshold X (e.g., X% SOC). For example, the battery-manager module 110 determines if the current SOC of the battery 104 is greater than the first SOC threshold *X* (e.g., 75% SOC). If the battery SOC is greater than the first SOC threshold *X* ("YES" at 404), then the battery-manager module 110 determines that the battery 104 has sufficient charge to sustain device operation and is not currently in need of charging. The method 400 then loops back to 402 to continue monitoring the battery temperature 112. If the battery-manager module 110 is less than (or equal to) the first SOC threshold *X* ("NO" at 404), then the battery-manager module 110 determines that the battery SOC is sufficiently depleted such that the battery 104 may be in need of charging, and the method 400 proceeds to 406.

At 406, the electronic device 102 obtains local-weather forecast data. In an example, the charge-time predictor 120 communicates with a weather source (e.g., general server, weather service, search engine), via the communication module 210 and over the network 128, to obtain local-weather forecast data 126. The local-weather forecast data 126 may include forecasted weather information local to the region in which the electronic device 102 is geographically located. The weather information may include any suitable number of days, including a single-day forecast, a 3-day forecast, a 5-day forecast, a 7-day forecast, a 10-day forecast, and so on. Hourly temperatures, solar information (e.g., cloudy, sunny), humidity levels, precipitation estimations, and so forth may be included in the forecasted weather information.

One example is depicted below in Table 1, which shows local-weather forecast data 126 for a 7-day period and corresponding hourly minimum ambient temperatures. In particular, Table 1 shows an approximate 3-hour window of time (out of a 24-hour period) for each of the next 7 days where the hourly ambient temperature for the electronic device 102 is at a minimum. The 3-hour window of time is used as an example amount of time to fully charge the battery 104 of the electronic device 102.

**Table 1: Example local-weather forecast data including minimum ambient temperatures**

| **Day** | **Min Ambient Temp (F) (3hr Window)** | **Average Ambient Temp (F)** | **Average Ambient Temp (C)** | **Time Period** |
|---|---|---|---|---|
| Thu | 3AM=85F, 4AM=84F, 5AM=83F | 84 | 28.8 | 3~6AM |
| Fri | 3AM=87F, 4AM=85F, 5AM=83F | 85 | 29.4 | 3~6AM |
| Sat | 3AM=84F, 4AM=82F, 5AM=80F | 82 | 27.7 | 3~6AM |
| Sun | 3AM=86F, 4AM=84F, 5AM=82F | 84 | 28.8 | 3~6AM |
| Mon | 3AM=90F, 4AM=89F, 5AM=88F | 89 | 31.6 | 3~6AM |
| Tue | 3AM=93F, 4AM=91F, 5AM=89F | 91 | 32 | 3~6AM |
| Wed | 3AM=91F, 4AM=88F, 5AM=88F | 89 | 31.9 | 3~6AM |

In the example shown in Table 1, the lowest temperatures are generally between 3AM and 6AM. The majority of the days in this forecast are predicted to have an ambient temperature of approximately 29 °C. For example, Friday's hourly minimum-ambient temperatures are forecasted to be 87 °F at 3AM, 85 °F at 4AM, and 83 °F at 5AM, resulting in an average ambient temperature of 85 °F (29.4 °C) for the 3-hour time period of approximately 3-6AM.

At 408, the electronic device 102 determines a time period when the battery temperature is estimated to be less than a second temperature threshold *T2*. The second temperature threshold *T2* may be the same as, or different from, the first temperature threshold *T1.* In an example, the second temperature threshold *T2* is approximately three degrees below the first temperature threshold *T1* to account for a tolerance or margin of error of the temperature sensors (e.g., thermistors) measuring the temperature of the battery 104.

To predict future battery temperatures 130 for the future time periods 122 having the minimum-ambient temperatures (e.g., minimum average ambient temperatures), the charge-time predictor 120 uses the future ambient temperatures 124 in combination with battery-temperature data derived under various circumstances and device-performance throttling modes. The battery-temperature data may be included in a lookup table defining battery temperatures that generally occur under one or more ambient temperatures (e.g., 30 °C, 35 °C, 40 °C), solar conditions (e.g., direct sunlight), housing color (e.g., darker colors tend to absorb more solar heat than lighter colors), device-performance levels affecting the amount of heat dissipation of the processor(s) 202, and so on. In another example, the battery-temperature data may be determined using machine learning.

The charge-time predictor 120 uses battery-temperature data to predict or estimate the future battery temperatures 130 for the future time periods 122, which have minimum future ambient temperatures 124, according to different device-performance throttling modes 118. An example is depicted in Table 2 below.

**Table 2: Estimated future battery temperatures under different device-performance throttling modes**

| **Day** | **Average Ambient Temp ^{©}** | **Battery Te^{©}(C) Mild Throttle** | **Battery ^{©}mp (C) Medium Throttle** | **Batte^{©} Temp (C) Severe Throttle** | **Battery Temp < 57°C** |
|---|---|---|---|---|---|
| Thu | 28.8 | 73.8 | 65.8 | 56.8 | Y |
| Fri | 29.4 | 74.4 | 66.4 | 57.4 | N |
| Sat | 27.7 | 72.7 | 64.7 | 55.7 | Y |
| Sun | 28.8 | 73.8 | 65.8 | 56.8 | Y |
| Mon | 31.6 | 76.6 | 68.6 | 59.6 | N |
| Tue | 32.7 | 77.7 | 69.7 | 60.7 | N |
| Wed | 31.9 | 76.9 | 68.9 | 59.9 | N |

In the example shown in Table 2, the average ambient temperature for the 3-hour time period with the minimum ambient temperatures during each day of the 7-day forecast from Table 1 is combined with battery-temperature data at different device-performance throttling modes to estimate the battery temperature achievable during those time periods. For example, because the average ambient temperature for the time period of 3-6AM on Thursday is forecasted to be 28.8 °C, the battery temperature using the mild-throttling mode 308 is estimated to be 73.8 °C, the battery temperature using the medium throttling mode 312 is estimated to be 65.8 °C, and the battery temperature using the severe-throttling mode 314 is estimated to be 56.8 °C. The 73.8 °C during mild throttling indicates that the battery 104 is able to discharge but not charge because the battery temperature is less than the maximum discharge temperature (e.g., 80 °C) but greater than the maximum charge temperature (e.g., 60 °C). The battery-manager module 110 can determine, however, that with severe throttling on Thursday between 3-6AM, the battery temperature is estimated to be 56.8 °C, which is less than the second temperature threshold T2 (e.g., 57 °C) and indicates that the battery 104 can be charged during that time period.

At 410, the battery-manager module 110 determines whether the battery can be charged within the next N days (e.g., if there is at least one future time period of the plurality of future time periods within the next N days in which the estimated future battery temperature is below the second temperature threshold T2). Any suitable value can be used for "N" including, e.g., 2, 3, 4, 5, and so forth. Continuing with the above example, the battery-manager module 110 uses the information in Table 2 and identifies three days (e.g., Thu, Sat, Sun) within the next 7 days, which have a 3-hour time period where the battery 104 can be charged if the power state of the electronic device 102 is reduced (e.g., using device-performance throttling). Because the battery 104 can be charged within the next e.g., three days ("YES" at 410), then at 412, no change to the power state (e.g., device-performance throttling modes) is implemented and the method proceeds to FIG. 5.

Suppose the information in Table 2 indicates instead that the battery temperature is estimated to not decrease to below the second temperature threshold T2 until Wednesday (e.g., there is no time period in which the estimated future battery temperature is below the second temperature threshold T2 until Wednesday), which is seven days away. This indicates that the ambient temperature is forecasted to be sufficiently high throughout multiple 24-hour windows (even during the night) such that even with a reduced power state (e.g., using device-performance throttling), the battery temperature 112 is estimated to be above the maximum charge temperature (e.g., 60 °C). Depending on the current SOC 114 of the battery 104, the battery 104 may be depleted if it cannot be charged within the next N days. Accordingly, if the battery 104 cannot be charged within the next N days (e.g., three days), then at 414, the electronic device 102 may, in response, enter a device-performance throttling mode to reduce the amount of power or battery consumption and extend the battery cycle to beyond the N days, where the combined ambient and reduced-power-state temperatures might be sufficiently low to enable the battery temperature to decrease to below the maximum charge temperature and thus enable the battery 104 to charge. In an example, the battery-manager module 110 causes the processor 202 to enter the medium throttling mode 312.

At 416, the battery-manager module 110 uses the local-weather forecast data 126 and the battery temperature information (e.g., Tables 1 and 2) to determine a future time period 122 within the next *N*+*M* days where the ambient temperature is forecasted to be sufficiently low to enable the battery 104 to charge over a future time period 122. The term "M" can be any suitable number, including 1, 2, 3, and so on. In one aspect, *N* may define a number of days that the battery 104 is estimated to last (until depletion) without device-performance throttling. The term *N*+*M* may define a total number of days that the battery is estimated to last if device-performance throttling is implemented. The method then proceeds to FIG. 5.

At 502, the electronic device 102 requests permission, from the user, to enter a severe-throttling mode during the determined time period. For example, the electronic device 102 presents a prompt or notification to alert the user that a future time period (e.g., the future time period 122) has been identified for charging the battery 104 if severe throttling 314 is applied. In this way, device-performance throttling does not affect the user experience without the user's knowledge and permission. Although the severe-throttling mode 314 is used in this example, the notification may request permission to enter any one of the device-performance throttling modes during the future time period 122.

At 504, the electronic device 102 determines if the user granted permission to implement device-performance throttling during the identified future time period (or immediately). If the user denies the request ("NO" at 504), then at 506, a delay timer is initiated. The delay timer is used to delay when the electronic device 102 restarts or repeats the method 400 by returning to 402 in FIG. 4. Expiration of the delay timer at 506 may trigger the electronic device 102 to restart the method 400 at 402 to again determine if the battery temperature has exceeded the first temperature threshold *T1* (e.g., maximum charge temperature) for charging the battery 104. In an example, the delay timer is set for one day (24 hours). However, the delay timer may be set for any suitable amount of time, including 6 hours, 10 hours, 12 hours, 18 hours, and so forth.

Returning to 504, if the electronic device 102 receives a user input granting permission to enter severe throttling at the identified future time period ("YES" at 504), then at 508, the electronic device 102 applies the severe-throttling mode 314 at the beginning of the determined time period (e.g., the identified future time period). In an example, at the beginning of the identified time period, the video-recording doorbell device 102-8 enters a doorbell-only mode, which disables the camera, microphones, Wi-Fi connection, and so on, leaving only the battery-powered doorbell chime functioning. Such severe throttling prevents non-battery functions from dissipating heat that may increase the battery temperature 112 and/or prevent the battery temperature 112 from decreasing to below the maximum charge temperature. In an example, the electronic device 102 applies the corresponding device-performance throttling mode for which permission was granted. If, for example, the user selects and grants permission to enter a throttling mode that is different from the requested throttling mode, then the electronic device 102 enters the user-selected throttling mode. In some implementations, the user may select a more-restrictive throttling mode than the requested throttling mode.

At 510, the electronic device 102 determines if the battery temperature is less than the second temperature threshold *T2*. For example, the battery-manager module 110 checks the battery temperature 112 to ensure that it is below the maximum charge temperature before charging the battery 104. If the battery temperature 112 is not less than the second temperature threshold *T2* ("NO" at 510), then the battery-manager module 110 continues to monitor the battery temperature 112. In some aspects, it may take several seconds or minutes for the battery temperature 112 to decrease to acceptable levels for charging the battery 104.

If the battery temperature 112 is below the second temperature threshold T2 (or below the first temperature threshold *T1*) ("YES" at 510), then at 512 the battery 104 is charged. Any suitable charging technique may be implemented to charge the battery 104, including fast charging, slow charging, or other standard charging.

At 514, the electronic device 102 monitors the SOC 114 of the battery 104 to determine if the battery charging is complete. In an example, the battery-manager module 110 determines if the SOC 114 of the battery 104 is at or greater than an SOC threshold (e.g., X% SOC). In some aspects, to reduce degradation of a Li-ion battery, the X% SOC may be set at 80% SOC. However, the X% SOC may be any suitable value, including 100%, 80%, 75%, 60%, and so on. The battery 104 may be considered to be "fully charged" (or the battery charging may be considered "complete") if the SOC 114 of the battery 104 is at or exceeds the SOC threshold (e.g., X% SOC), though the SOC 114 of the battery 104 may be less than 100%. If the battery 104 is fully charged ("YES" at 514) such that the SOC 114 is at or greater than the SOC threshold (e.g., X% SOC), then at 516, the battery charging is ended. For example, the battery-manager module 110 ceases the charging of the battery 104 when the SOC 114 reaches or exceeds the SOC threshold.

If the battery 104 is not yet fully charged ("NO" at 514), then at 518, the battery-manager module 110 determines if the time period has expired. If the time period has not yet expired ("NO" at 518), then the electronic device 102 continues to charge the battery 104. If the time period has expired ("YES" at 518), then the electronic device 102 can stop charging the battery 104 at 516 in anticipation of the ambient temperature rising, which may cause the battery temperature to also increase. However, the electronic device 102 may continue to charge the battery 104 as long as the (measured) battery temperature is below the second temperature threshold. After 516, the method 500 returns to the method 400 to continue monitoring the battery temperature 112 and the SOC 114 of the battery 104.

## Claims

1. A method performed by an electronic device (102), the method comprising:
determining that a battery temperature (112) of a battery (104) of the electronic device (102) has exceeded a first temperature threshold;
in response to the battery temperature (112) exceeding the first temperature threshold, determining whether to initiate charging of the battery (104) based on a first state-of-charge threshold;
responsive to a determination that the state-of-charge of the battery (104) is below the first state-of-charge threshold, obtaining local-weather-forecast data (126) from a weather source over a network (128) based on a geographic location of the electronic device (102);
estimating future battery temperatures (130) for each of a plurality of future time periods (122) based on the local-weather-forecast data (126) combined with battery-temperature data associated with a plurality of device-performance throttling modes (118) for the electronic device (102); and
identifying whether one or more future time periods of the plurality of future time periods (122) exists within a next N number of days in which the estimated future battery temperature (130) is below a second temperature threshold to enable the battery (104) to be charged.

2. The method of claim 1, further comprising budgeting current battery usage by adjusting device-performance throttling to extend a current cycle of the battery (104) until the identified one or more future time periods in which the battery temperature (130) is estimated to be sufficiently low to enable the battery (104) to be charged.

3. The method of claim 1 or 2, further comprising:
determining that no future time period of the plurality of future time periods (122) exists within the next N number of days in which the estimated future battery temperature (130) is below the second temperature threshold; and
based on determining no future time period of the plurality of future time periods (122) exists within the next N number of days in which the estimated future battery temperature (130) is below the second temperature threshold, entering a device-performance throttling mode of the plurality of device-performance throttling modes (118).

4. The method of claim 3, further comprising selecting the device-performance throttling mode from the plurality of device-performance throttling modes (118) to reduce the battery temperature based on a reduction of power output by the electronic device (102).

5. The method of any of the preceding claims, wherein:
the local-weather forecast data (126) includes future ambient temperatures (124) and solar conditions associated with the geographic location of the electronic device (102); and
the future battery temperatures (130) are estimated using the future ambient temperatures (124) and solar conditions.

6. The method of any of the preceding claims, further comprising:
identifying a future time period in which the battery temperature (130) is estimated to be less than the second temperature threshold; and
during the identified future time period, entering the device-performance throttling mode of the plurality of device-performance throttling modes (118) to decrease the battery temperature and enable charging of the battery (104).

7. The method of claim 6, further comprising:
responsive to identifying the future time period, providing a notification requesting permission from a user of the electronic device (102) to enter the device-performance throttling mode during the identified future time period; and
receiving a user input granting the permission, wherein entering the device-performance throttling mode includes entering the device-performance throttling mode based on the granted permission and at a beginning of the identified future time period.

8. The method of claim 6 or 7, further comprising:
during the identified future time period and subsequent to entering the device-performance throttling mode, monitoring the battery temperature relative to the second temperature threshold; and
responsive to the battery temperature decreasing to a temperature that is below the second temperature threshold, charging the battery (104).

9. The method of any of the preceding claims, wherein the second temperature threshold is equal to or less than the first temperature threshold.

10. The method of any of the preceding claims, wherein the first temperature threshold is approximately 60 °C.

11. The method of any of the preceding claims, wherein the second temperature threshold is approximately 57 °C.

12. The method of claim 8, further comprising, responsive to expiration of the identified future time period, ceasing the charging of the battery (104).

13. The method of claim 8, further comprising, responsive to the state-of-charge of the battery exceeding a second state-of-charge threshold during the identified future time period, ceasing the charging of the battery (104).

14. An electronic device comprising:
a battery (104) configured to power one or more functions;
a processor (202); and
a memory(204) for storing computer-readable instructions that, when executed by the processor, cause one or more modules to perform the method of any one of claims 1 to 13.

15. The electronic device of claim 14, wherein the one or more modules include:
a battery-manager module (110) configured to perform the determining that the battery temperature (112) has exceeded the first temperature threshold and the determining whether to initiate charging of the battery (104) based on the first state-of-charge threshold; and
a charge-time predictor (120) configured to perform the obtaining local-weather-forecast data (126), estimating the future battery temperatures (130), and the identifying whether one or more future time periods exists within the next N number of days.

## Patentansprüche

1. Verfahren, das von einer elektronischen Vorrichtung (102) durchgeführt wird, wobei das Verfahren Folgendes umfasst:
Bestimmen, dass eine Batterietemperatur (112) einer Batterie (104) der elektronischen Vorrichtung (102) einen ersten Temperaturschwellenwert überschritten hat;
als Reaktion darauf, dass die Batterietemperatur (112) den ersten Temperaturschwellenwert überschreitet, Bestimmen, ob Laden der Batterie (104) initiiert wird, basierend auf einem ersten Ladezustandsschwellenwert;
als Reaktion auf eine Bestimmung, dass der Ladezustand der Batterie (104) unter dem ersten Ladezustandsschwellenwert liegt, Erlangen von Lokalwettervorhersagedaten (126) von einer Wetterquelle über ein Netzwerk (128) basierend auf einem geografischen Standort der elektronischen Vorrichtung (102);
Schätzen zukünftiger Batterietemperaturen (130) für jeden einer Vielzahl zukünftiger Zeiträume (122) basierend auf den Lokalwettervorhersagedaten (126) in Kombination mit Batterietemperaturdaten, die mit einer Vielzahl von Vorrichtungsleistungsdrosselungsmodi (118) für die elektronische Vorrichtung (102) assoziiert sind; und
Identifizieren, ob ein oder mehrere zukünftige Zeiträume der Vielzahl von zukünftigen Zeiträumen (122) innerhalb einer nächsten Anzahl N von Tagen existieren, in denen die geschätzte zukünftige Batterietemperatur (130) unter einem zweiten Temperaturschwellenwert liegt, um Laden der Batterie (104) zu ermöglichen.

2. Verfahren nach Anspruch 1, ferner umfassend Budgetieren einer aktuellen Batterienutzung durch Anpassen einer Vorrichtungsleistungsdrosselung, um einen aktuellen Zyklus der Batterie (104) bis zu dem einen oder den mehreren identifizierten zukünftigen Zeiträumen zu verlängern, in denen die Batterietemperatur (130) als ausreichend niedrig geschätzt wird, um Laden der Batterie (104) zu ermöglichen.

3. Verfahren nach Anspruch 1 oder 2, ferner umfassend:
Bestimmen, dass kein zukünftiger Zeitraum der Vielzahl von zukünftigen Zeiträumen (122) innerhalb der nächsten Anzahl N von Tagen existiert, in dem die geschätzte zukünftige Batterietemperatur (130) unter dem zweiten Temperaturschwellenwert liegt; und
basierend auf dem Bestimmen, dass kein zukünftiger Zeitraum der Vielzahl von zukünftigen Zeiträumen (122) innerhalb der nächsten Anzahl N von Tagen existiert, in dem die geschätzte zukünftige Batterietemperatur (130) unter dem zweiten Temperaturschwellenwert liegt, Eintreten in einen Vorrichtungsleistungsdrosselungsmodus der Vielzahl von Vorrichtungsleistungsdrosselungsmodi (118).

4. Verfahren nach Anspruch 3, ferner umfassend Auswählen des Vorrichtungsleistungsdrosselungsmodus aus der Vielzahl von Vorrichtungsleistungsdrosselungsmodi (118), um die Batterietemperatur basierend auf einer Reduzierung der Leistungsabgabe durch die elektronische Vorrichtung (102) zu reduzieren.

5. Verfahren nach einem der vorstehenden Ansprüche, wobei:
die Lokalwettervorhersagedaten (126) zukünftige Umgebungstemperaturen (124) und Sonnenverhältnisse beinhalten, die mit dem geografischen Standort der elektronischen Vorrichtung (102) assoziiert sind; und
die zukünftigen Batterietemperaturen (130) unter Verwendung der zukünftigen Umgebungstemperaturen (124) und Sonnenverhältnisse geschätzt werden.

6. Verfahren nach einem der vorstehenden Ansprüche, ferner umfassend:
Identifizieren eines zukünftigen Zeitraums, in dem die Batterietemperatur (130) als unter dem zweiten Temperaturschwellenwert liegend geschätzt wird; und
während des identifizierten zukünftigen Zeitraums Eintreten in den Vorrichtungsleistungsdrosselungsmodus der Vielzahl von Vorrichtungsleistungsdrosselungsmodi (118), um die Batterietemperatur zu senken und Laden der Batterie (104) zu ermöglichen.

7. Verfahren nach Anspruch 6, ferner umfassend:
als Reaktion auf das Identifizieren des zukünftigen Zeitraums Bereitstellen einer Benachrichtigung, die von einem Benutzer des elektronischen Vorrichtung (102) die Erlaubnis zum Eintreten in den Vorrichtungsleistungsdrosselungsmodus während des identifizierten zukünftigen Zeitraums anfordert; und
Empfangen einer Benutzereingabe, die die Erlaubnis erteilt, wobei das Eintreten in den Vorrichtungsleistungsdrosselungsmodus ein Eintreten in den Vorrichtungsleistungsdrosselungsmodus basierend auf der erteilten Erlaubnis und zu Beginn des identifizierten zukünftigen Zeitraums beinhaltet.

8. Verfahren nach Anspruch 6 oder 7, ferner umfassend:
während des identifizierten zukünftigen Zeitraums und nach dem Eintreten in den Vorrichtungsleistungsdrosselungsmodus Überwachen der Batterietemperatur relativ zu dem zweiten Temperaturschwellenwert; und
als Reaktion auf ein Absinken der Batterietemperatur auf eine Temperatur, die unter dem zweiten Temperaturschwellenwert liegt, Laden der Batterie (104).

9. Verfahren nach einem der vorhergehenden Ansprüche, wobei der zweite Temperaturschwellenwert gleich dem ersten Temperaturschwellenwert ist oder darunter liegt.

10. Verfahren nach einem der vorhergehenden Ansprüche, wobei der erste Temperaturschwellenwert ungefähr 60 °C beträgt.

11. Verfahren nach einem der vorhergehenden Ansprüche, wobei der erste Temperaturschwellenwert ungefähr 57 °C beträgt.

12. Verfahren nach Anspruch 8, ferner umfassend Beenden des Ladens der Batterie (104) als Reaktion auf den Ablauf des identifizierten zukünftigen Zeitraums.

13. Verfahren nach Anspruch 8, ferner umfassend Beenden des Ladens der Batterie (104) als Reaktion darauf, dass der Ladezustand der Batterie einen zweiten Ladezustandsschwellenwert während des identifizierten zukünftigen Zeitraums überschreitet.

14. Elektronische Vorrichtung, umfassend:
eine Batterie (104), die zum Versorgen einer oder mehrerer Funktionen ausgelegt ist;
einen Prozessor (202); und
einen Speicher (204) zum Speichern von computerlesbaren Anweisungen, die bei Ausführung durch den Prozessor ein oder mehrere Module zum Durchführen des Verfahrens nach einem der Ansprüche 1 bis 13 veranlassen.

15. Elektronische Vorrichtung nach Anspruch 14, wobei das eine oder die mehreren Module Folgendes beinhalten:
ein Batteriemanagermodul (110), das zum Durchführen des Bestimmens, dass die Batterietemperatur (112) den ersten Temperaturschwellenwert überschritten hat, und des Bestimmens,
ob Laden der Batterie (104) initiiert werden soll, basierend auf dem ersten Ladezustandsschwellenwert ausgelegt ist; und
eine Ladezeitvorhersageeinrichtung (120), der zum Durchführen des Erlangens von Lokalwettervorhersagedaten (126), Schätzens der zukünftigen Batterietemperaturen (130) und des Identifizierens, ob ein oder mehrere zukünftige Zeiträume innerhalb der nächsten Anzahl N von Tagen existieren, ausgelegt ist.

## Revendications

1. Procédé réalisé par un dispositif électronique (102), le procédé comprenant :
la détermination qu'une température de batterie (112) d'une batterie (104) du dispositif électronique (102) a dépassé un premier seuil de température ;
en réponse au fait que la température de batterie (112) dépasse le premier seuil de température, la détermination s'il faut lancer la charge de la batterie (104) sur la base d'un premier seuil d'état de charge ;
en réponse à une détermination que l'état de charge de la batterie (104) est inférieur au premier seuil d'état de charge, l'obtention de données de prévision météorologique locale (126) à partir d'une source météorologique sur un réseau (128) sur la base d'un emplacement géographique du dispositif électronique (102) ;
l'estimation de températures de batterie futures (130) pour chacune d'une pluralité de périodes de temps futures (122) sur la base des données de prévision météorologique locale (126) combinées avec des données de température de batterie associées à une pluralité de modes de limitation de performances de dispositif (118) pour le dispositif électronique (102) ; et
l'identification si une ou plusieurs périodes de temps futures de la pluralité de périodes de temps futures (122) existent dans un prochain nombre N de jours dans lesquels la température de batterie future estimée (130) est inférieure à un second seuil de température pour permettre à la batterie (104) d'être chargée.

2. Procédé selon la revendication 1, comprenant également la budgétisation de l'utilisation de batterie actuelle en ajustant de la limitation de performances de dispositif pour prolonger un cycle actuel de la batterie (104) jusqu'à les une ou plusieurs périodes de temps futures identifiées dans lesquelles la température de batterie (130) est estimée être suffisamment basse pour permettre à la batterie (104) d'être chargée.

3. Procédé selon la revendication 1 ou 2, comprenant également :
la détermination qu'aucune période de temps future de la pluralité de périodes de temps futures (122) n'existe dans le prochain nombre N de jours dans lesquels la température de batterie future estimée (130) est inférieure au second seuil de température ; et
sur la base de la détermination qu'aucune période de temps future de la pluralité de périodes de temps futures (122) n'existe dans le nombre N de prochains jours dans lesquels la température de batterie future estimée (130) est inférieure au second seuil de température, l'entrée dans un mode de limitation de performances de dispositif de la pluralité de modes de limitation de performances de dispositif (118).

4. Procédé selon la revendication 3, comprenant également la sélection du mode de limitation de performances de dispositif parmi la pluralité de modes de limitation de performances de dispositif (118) pour réduire la température de batterie sur la base d'une réduction de puissance émise par le dispositif électronique (102).

5. Procédé selon l'une quelconque des revendications précédentes, dans lequel :
les données de prévision météorologique locale (126) comportent des températures ambiantes futures (124) et des conditions solaires associées à l'emplacement géographique du dispositif électronique (102) ; et
les températures de batterie futures (130) sont estimées à l'aide des températures ambiantes futures (124) et des conditions solaires.

6. Procédé selon l'une quelconque des revendications précédentes, comprenant également :
l'identification d'une période de temps future dans laquelle la température de batterie (130) est estimée être inférieure au second seuil de température ; et
pendant la période de temps future identifiée, l'entrée dans le mode de limitation de performances de dispositif de la pluralité de modes de limitation de performances de dispositif (118) pour diminuer la température de batterie et permettre la charge de la batterie (104).

7. Procédé selon la revendication 6, comprenant également :
en réponse à l'identification de la période de temps future, la fourniture d'une notification demandant à un utilisateur du dispositif électronique (102) l'autorisation d'entrer dans le mode de limitation de performances de dispositif pendant la période de temps future identifiée ; et
la réception d'une entrée d'utilisateur accordant l'autorisation, dans lequel l'entrée dans le mode de limitation de performances de dispositif comporte l'entrée dans le mode de limitation de performances de dispositif sur la base de l'autorisation accordée et à un début de la période de temps future identifiée.

8. Procédé selon la revendication 6 ou 7, comprenant également :
pendant la période de temps future identifiée et après l'entrée dans le mode de limitation de performances de dispositif, la surveillance de la température de batterie par rapport au second seuil de température ; et
en réponse à la diminution de la température de batterie jusqu'à une température inférieure au second seuil de température, la charge de la batterie (104).

9. Procédé selon l'une quelconque des revendications précédentes, dans lequel le second seuil de température est égal ou inférieur au premier seuil de température.

10. Procédé selon l'une quelconque des revendications précédentes, dans lequel le premier seuil de température est d'environ 60 °C.

11. Procédé selon l'une quelconque des revendications précédentes, dans lequel le second seuil de température est d'environ 57 °C.

12. Procédé selon la revendication 8, comprenant également, en réponse à l'expiration de la période de temps future identifiée, l'arrêt de la charge de la batterie (104).

13. Procédé selon la revendication 8, comprenant également, en réponse au fait que l'état de charge de la batterie dépasse un second seuil d'état de charge pendant la période de temps future identifiée, l'arrêt de la charge de la batterie (104).

14. Dispositif électronique comprenant :
une batterie (104) configurée pour alimenter une ou plusieurs fonctions ;
un processeur (202) ; et
une mémoire (204) pour stocker des instructions lisibles par ordinateur qui, lorsqu'elles sont exécutées par le processeur, amènent un ou plusieurs modules à réaliser le procédé selon l'une quelconque des revendications 1 à 13.

15. Dispositif électronique selon la revendication 14, dans lequel les un ou plusieurs modules comportent :
un module de gestion de batterie (110) configuré pour réaliser la détermination que la température de batterie (112) a dépassé le premier seuil de température et la détermination s'il faut lancer la charge de la batterie (104) sur la base du premier seuil d'état de charge ; et
un prédicteur de temps de charge (120) configuré pour réaliser l'obtention de données de prévision météorologique locale (126), l'estimation des températures de batterie futures (130), et l'identification de l'existence d'une ou de plusieurs périodes de temps futures dans le prochain nombre N de jours.
